# EUROPEAN PATENT APPLICATION

(11) **EP 4 342 579 A1**
(43) Date of publication of application: **27.03.2024**
(21) Application number: 22941870.2
(22) Date of filing: 23.11.2022
(51) Int. Cl.: B01J 20/24, B01J 20/28, B01J 20/30, C02F 1/28

(54) **PREPARATION METHOD FOR HIGH-ADSORPTION-CAPACITY GRANULAR ALUMINUM SALT LITHIUM EXTRACTION ADSORBENT**

(30) Priority: 04.08.2022 CN 202210935543
(71) Applicant: Chengdu Chemphys Chemical Industry Co., Ltd, Hi-Tech District Chengdu Sichuan 610041 (CN); Sinolithium Materials Limited, Tsim Sha Tsui KL, Hong Kong 621000 (HK)
(72) Inventor: YANG, Jinfeng, Chengdu Sichuan 610041 (CN); GAO, Feng, Chengdu Sichuan 610041 (CN); DENG, Longfei, Chengdu Sichuan 610041 (CN); BAN, Wenjun, Chengdu Sichuan 610041 (CN); CAI, Rongfu, Chengdu Sichuan 610041 (CN); DAI, Yihua, Chengdu Sichuan 610041 (CN)
(74) Representative: Ipside
(86) International application number: PCT/CN2022/133586
(87) International publication number: WO 2024/027044

(57) **Abstract**

The present invention relates to a preparation method for a high-adsorption-capacity granular aluminum salt lithium extraction adsorbent. The method includes the following steps: step 1, preparation of lithium-intercalated aluminum salt precursor slurry: uniformly mixing an aluminum source, a lithium source and water, and then adding alkali liquor to adjust the pH value so as to obtain the wet lithium-intercalated aluminum salt precursor; step 2, integrated granulation: 1) preparing a VC composite adhesive; 2) blending and homogenizing; 3) granulating; and step 3, drying and activating: drying, washing and activating the granulated adsorbent to obtain the granular aluminum salt lithium extraction adsorbent. The environment-friendly aluminum salt lithium extraction adsorbent prepared by the method has the advantages of high porosity, high lithium adsorption capacity, high lithium extraction rate, long cycle service life and the like, is effectively used for lithium extraction of salt lakes with high magnesium-lithium ratio and low lithium grade, including lithium chloride type salt lakes, lithium sulfate type salt lakes and salt lakes combining the two types; and good adsorption activity and selectivity are shown. The preparation method is short in technological process, simple to operate, green and clean, and has good industrial application value.

## Description

### Technical Field

The present invention relates to the technical field of new chemical materials preparation, in particular to a preparation method for a high-adsorption-capacity granular aluminum salt lithium extraction adsorbent.

### Background of the Invention

Natural lithium resources are mainly reserved in granite type deposits and salt lake brine, seawater and geothermal water. The statistical data suggest that these resources are mainly presented in lithium-bearing brine, which accounts for about 61% of the total lithium resources, lithium ore accounts for about 34%, and the remaining 5% of lithium resources are contained in oil fields and geothermal water.

Lithium extraction by adsorption is a novel process developed in recent years for extracting lithium from salt lakes. This process is to selectively adsorb lithium ions from raw brine by using specific lithium absorbent materials. It can quickly extract lithium from brine with an overall recovery rate of about 85%, greatly improving the value and utilization of resources. It is the most competitive development direction for lithium extraction from salt lakes. At present, research experts at home and abroad are committed to developing a lithium adsorbent with stable structure, low solution loss, high adsorption capacity and high adsorption rate.

Manganese-based or titanium-based lithium ion sieve adsorbents show high adsorption activity and selectivity to Li ions, but they are not widely used in industrial application due to relatively high solution loss and harsh requirements in practical use. In contrast, aluminum-based lithium extraction adsorbents have such advantages as simple preparation process, wide raw material sources, low price, high accessibility, efficient adsorption and extraction of lithium ions from salt lake brine with low lithium grade and high magnesium-lithium ratio (without strict requirements on pH value of brine) and desorption in neutral deionized water. In recent years, it has attracted the attention of researchers at home and abroad, and the layered aluminum-lithium adsorbent is also the only lithium extraction adsorbent that has been used industrially. These researchers are actively developing the synthesis, molding and granulation methods related to aluminum salt adsorbent for years. However, the existing preparation methods are difficult to avoid the reduction of specific surface area and porosity, low adsorption capacity and further reduction after granulation, and unremarkable superiority in dynamic adsorption. In addition, the molding process is inevitably associated with non-environmental friendly binding agents, which complicate the operation, so the practical usage of these methods is not promising.

### Summary of the Invention

In order to solve the problems in the prior art, the main object of the present invention is to provide a preparation method for a high-adsorption-capacity granular aluminum salt lithium extraction adsorbent, which is used to prepare environment-friendly aluminum salt lithium extraction adsorbent particles that have such advantages as high porosity, high lithium extraction rate, high lithium adsorption capacity and low solution loss in recycling. The adsorbent can be used for effectively extracting lithium from salt lakes with low lithium grade and high magnesium-lithium ratio, including lithium chloride type salt lakes, lithium sulfate type salt lakes and salt lakes combining the two types, and shows excellent adsorption activity and selectivity that the lithium adsorption capacity reaches 8-16mg/g within 15 minutes and the elution rate is greater than 99%. The preparation method is applied under moderate process conditions, simple to operate, economical and environment-friendly, and it integrates the preparation of functional materials with molding and granulation, thus greatly shortening the process flow. The granulated adsorbent shows excellent cycle stability.

In order to achieve the above objectives, the technical solution adopted in the present invention is as follows:
A preparation method for a high-adsorption-capacity granular aluminum salt lithium extraction adsorbent, including the following steps:
step 1, preparation of lithium-intercalated aluminum salt precursor slurry:
   uniformly mixing an aluminum source, a lithium source and water in proportion, ultrasonically stirring to dissolve, and obtaining a mixed salt solution, adding alkali liquor to the mixed salt solution to adjust the pH value to 6-9, and then obtaining the lithium-intercalated aluminum salt precursor slurry after reaction;
step 2, integrated granulation:
   A) preparing a VC composite adhesive: dissolving biological polysaccharide in water, adding an adjuvant and stirring to obtain C hydrosol; dissolving an aqueous additive in hot water to prepare V hydrosol; and mixing the resulting prepared C hydrosol and the V hydrosol in proportion to obtain the composite adhesive, namely the VC composite adhesive;
      preferably, the mass fraction of C hydrosol is 5-10%; and the mass fraction of V hydrosol is 5-10%.
   B) blending and homogenizing: adding the VC composite adhesive prepared in A) to the lithium-intercalated aluminum salt precursor slurry obtained in step 1, stirring to disperse and homogenizing at high speed, and ultrasonically stirring to obtain blended slurry;
   C) granulating: dropping the blended slurry into a receptor fluid through a granulating device for molding, and then sieving; and
      preferably, sieving out particles from 0.5mm to 2.5mm in size.
   D) cross-linking: soaking the sieved granulated particles in a cross-linked fluid to obtain a granular material; and
step 3, drying and activating:
   drying, dehydrating, washing and activating the granular material prepared in step 2 to obtain the granular aluminum salt lithium extraction adsorbent.

As a preferred implementation of the present application, the aluminum source in step 1 is polyaluminum chloride for drinking water use, polyaluminum ferric chloride for drinking water use, food grade polyaluminum chloride or aluminum chlorohydrate; the lithium source is any one or more selected from a group consisting of lithium hydroxide, lithium bicarbonate, lithium sulfate and lithium hydroxide; the alkali liquor is any one selected from a group consisting of aqueous solutions of sodium hydroxide, potassium hydroxide, sodium carbonate, potassium carbonate, sodium bicarbonate and potassium bicarbonate; and the concentration of the alkali liquor ranges from 1mol/L to 5mol/L.

As a preferred implementation of the present application, the addition amount of aluminum source and lithium source in step 1 is 6.5:1-1.5:1 according to the molar ratio of aluminum to lithium; and a solid content is controlled as 15%-50% by the amount of water added.

As a preferred implementation of the present application, the biological polysaccharide in step A) is chitosan, which includes acid-soluble chitosan and modified chitosan; the modified chitosan is any one selected from a group consisting of hydrochloride chitosan, carboxymethyl chitosan and quaternary ammonium salt chitosan; As a preferred implementation of the present application, the adjuvant in step A) is any one or more selected from a group consisting of citric acid, lactic acid, oxalic acid, gluconic acid, glycolic acid, malic acid and tartaric acid, and the addition amount of the adjuvant is controlled as 0%-10% by mass.

As a preferred implementation of the present application, the aqueous additive in step A) is any one selected from a group consisting of polyvinyl alcohol, sodium alginate and agar, and the hot water is at temperature of 70-95°C.

As a preferred implementation of the present application, the mass ratio of the biological polysaccharide to the aqueous additive in the VC composite adhesive in step A) is 8-2:1.

As a preferred implementation of the present application, the ratio of the VC composite adhesive to the aluminum salt precursor slurry in step A) is 1:7-1:9 by mass ratio of adhesive to powder in molded material.

As a preferred implementation of the present application, the receptor fluid in step C) is any one or more selected from a group consisting of aqueous solutions of sodium hydroxide, potassium hydroxide and lithium hydroxide, and pH value is controlled as 10-13.

As a preferred implementation of the present application, the cross-linked fluid in step D) is any one selected from a group consisting of aqueous solutions of citral, cinnamyl aldehyde, citronellal, anisaldehyde and genipin, and the crosslinking time ranges from 0.5h-24h.

As a preferred implementation of the present application, the speed of the high-speed stirring in step B) is 1000-2500r/min, and the ultrasonic frequency is 20KHZ-60KHZ.

As a preferred implementation of the present application, the drying method in step 3 is vacuum drying, freeze drying, microwave drying or infrared drying; and after drying, the water content of the material is controlled as 10wt%-80wt%, more preferably, 30wt %-70wt%.

When freeze drying is selected, the drying process is carried out by vacuumizing to 0pa-10pa at temperature of -50°C-5°C, and holding for 3h-20h, preferably 3h-12h.

Compared with the prior art, the present invention has the following beneficial effects:
(1) The method involves short process and moderate reaction conditions, allowing synthesis in one step at normal pressure and temperature. The overall molding and granulation process is green, clean, environment-friendly and controllable without secondary pollution.
(2) The resulting prepared granular aluminum salt lithium extraction absorbent material is used for effectively extracting lithium from salt lakes with low lithium grade and high magnesium-lithium ratio, including lithium chloride type salt lakes, lithium sulfate type salt lakes and salt lakes combining the two types.
(3) The resulting prepared granular aluminum salt lithium extraction absorbent material has such advantages as high porosity, high lithium extraction rate, high lithium adsorption capacity and low solution loss in recycling.

### Brief description of the Drawings

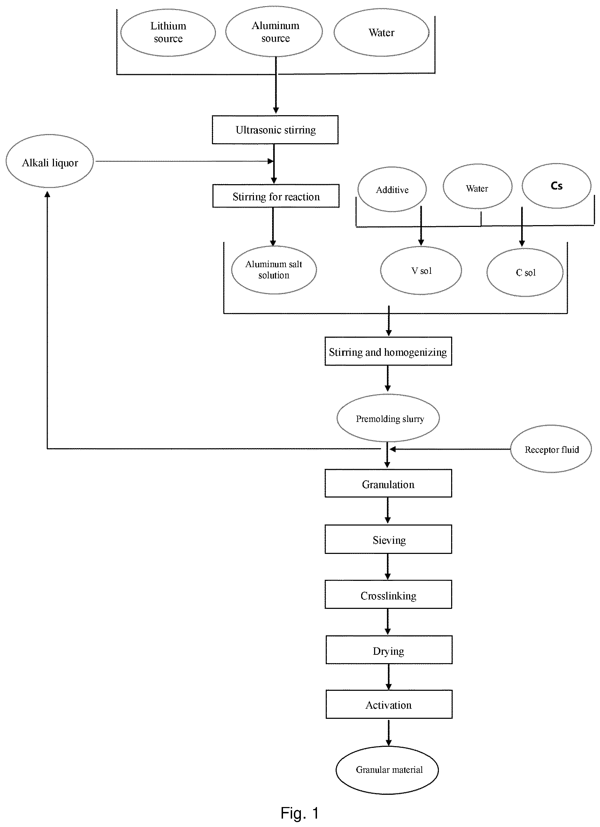

Fig. 1 is a schematic diagram of the preparation process flow of the granular adsorbent in the present invention.

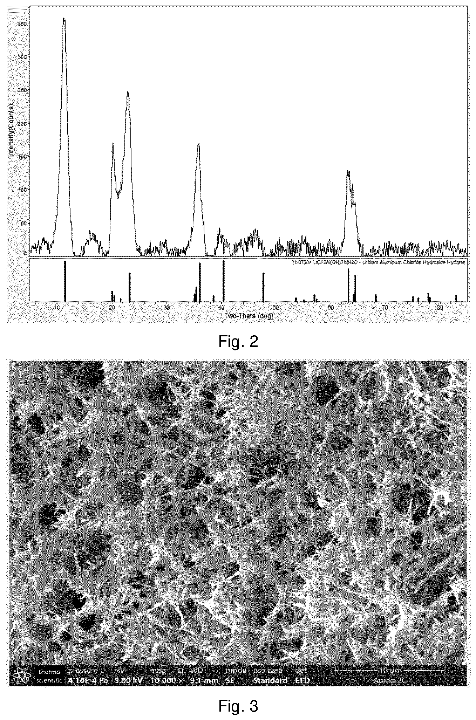

Fig. 2 is an XRD spectrum of the granular material sample prepared in Embodiment 1.
Fig. 3 is an SEM photograph of the cross-section of the particles prepared in Embodiment 1.

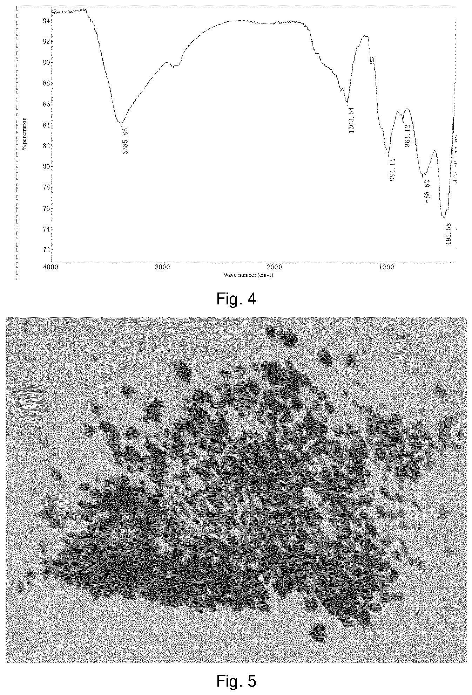

Fig. 4 is an infrared spectrum of the granular material prepared in Embodiment 1.
Fig. 5 is a photograph of the granular material sample prepared in Embodiment 1.

### Detailed Description of Embodiments

A preparation method for a high-adsorption-capacity granular aluminum salt lithium extraction adsorbent, including the following steps:
step 1, preparation of lithium-intercalated aluminum salt precursor slurry:
   uniformly mixing an aluminum source, a lithium source and water in proportion, ultrasonically stirring to dissolve, and obtaining a mixed salt solution, adding alkali liquor to the mixed salt solution to adjust the pH value to 6-9, which can specifically be 6, 7, 8 and 9; and then obtaining the lithium-intercalated aluminum salt precursor slurry after reaction;
step 2, integrated granulation:
   A) preparing a VC composite adhesive: dissolving biological polysaccharide in water, adding an adjuvant and stirring to obtain C hydrosol; dissolving an aqueous additive in hot water to prepare V hydrosol; and mixing the resulting prepared C hydrosol and the V hydrosol in proportion to obtain the composite adhesive, namely the VC composite adhesive;
   B) blending and homogenizing: adding the VC composite adhesive prepared in A) to the lithium-intercalated aluminum salt precursor slurry obtained in step 1, stirring to disperse and homogenizing at high speed, and ultrasonically stirring to obtain blended slurry;
   C) granulating: dropping the blended slurry into a receptor fluid through a granulating device for molding, and then sieving; and
      preferably, sieving out particles from 0.5mm to 2.5mm in size;
   D) cross-linking: soaking the sieved granulated particles in a cross-linked fluid to obtain a granular material; and
step 3, drying and activating:
   drying, dehydrating, washing and activating the granulated adsorbent prepared in step 2 to obtain the granular aluminum salt lithium extraction adsorbent.

After repeated tests and researches, the inventors of the present invention have defined the specific values of the additives and the addition amounts of the additives involved in the preparation method, and have prepared the functional material in the present invention with low cost and excellent performance accordingly.

Wherein the aluminum source in step 1 is polyaluminum chloride for drinking water use, polyaluminum ferric chloride for drinking water use, food grade polyaluminum chloride or aluminum chlorohydrate; the lithium source is any one or more selected from a group consisting of lithium hydroxide, lithium bicarbonate, lithium sulfate and lithium hydroxide; the alkali liquor is any one selected from a group consisting of aqueous solutions of sodium hydroxide, potassium hydroxide, sodium carbonate, potassium carbonate, sodium bicarbonate and potassium bicarbonate, preferably, one or more of a group consisting of lithium hydroxide, lithium bicarbonate and lithium hydroxide; and the concentration of the alkali liquor ranges from 1mol/L to 5mol/L, which can specifically be 1mol/L, 1.5mol/L, 2mol/L, 2.5mol/L, 3mol/L, 3.5mol/L, 4mol/L, 4.5mol/L and 5mol/L, and more preferably, 1.5mol/L-3.5mol/L.

Preferably, the addition amount of aluminum source and lithium source in step 1 is 6.5:1-1.5:1 according to the molar ratio of aluminum to lithium, which can specifically be 6.5:1, 6:1, 5.5:1, 5:1, 4.5:1, 4:1, 3.5:1, 3:1, 2.5:1, 2:1 and 1.5:1; more preferably, 6:1-1.95:1; and a solid content is controlled as 15%-50% by the amount of water added, which can specifically be 15%, 20%, 25%, 30%, 35%, 40%, 45% and 50%; more preferably, 15%-30%.

Preferably, the biological polysaccharide in step A) is chitosan, which includes acid-soluble chitosan and modified chitosan; and the modified chitosan is any one selected from a group consisting of chitosan, hydrochloride chitosan, carboxymethyl chitosan and quaternary ammonium salt chitosan.

As a preferred implementation of the present application, the adjuvant in step A) is any one or more selected from a group consisting of citric acid, lactic acid, oxalic acid, gluconic acid, glycolic acid, malic acid and tartaric acid.

The addition amount of the adjuvant is controlled as 0%-10% by mass, which can specifically be 0%, 1%, 1.5%, 2%, 2.5%, 3%, 3.5%, 4%, 4.5%, 5%, 5.5%, 6%, 6.5%, 7%, 7.5%, 8%, 8.5%, 9%, 9.5% and 10%;
the mass fraction of C hydrosol in step A) is 5-10%, which can specifically be 5%, 6%, 7%, 8%, 9% and 10%; the mass fraction of V hydrosol is 5-10%, which can specifically be 5%, 6%, 7%, 8%, 9% and 10%.

Preferably, the aqueous additive in step A) is any one selected from a group consisting of polyvinyl alcohol, sodium alginate and agar, and the hot water is at temperature of 70-95°C, which can specifically be 70°C, 75°C, 80°C, 85°C, 90°C and 95°C.

Preferably, the mass ratio of the biological polysaccharide to the aqueous additive in the VC composite adhesive in step A) is 8-2:1, which can specifically be 8:1, 7:1, 6:1, 5:1, 4:1, 3:1 and 2:1.

Preferably, the ratio of the VC composite adhesive to the aluminum salt precursor slurry in step A) is 1:7-1:9 by mass ratio of adhesive to powder in molded material, which can specifically be 1:7, 1:7.5, 1:8, 1:8.5, and 1:9.

Preferably, the receptor fluid in step C) is any one or more selected from a group consisting of aqueous solutions of sodium hydroxide, potassium hydroxide and lithium hydroxide, and pH value is controlled as 10-13, which can specifically be 10, 10.5, 11, 11.5, 12, 12.5, 13, more preferably, 12-13.

Preferably, the cross-linked fluid in step D) is any one selected from a group consisting of aqueous solutions of citral, cinnamyl aldehyde, citronellal, anisaldehyde and genipin, and the crosslinking time ranges from 0.5h-24h, which can specifically be 0.5h, 1h, 2h, 3h, 4h, 5h, 6h, 7h, 8h, 9h, 10h, 11h, 12h, 13h, 14h, 15h, 16h, 17h, 18h, 19h, 20h, 21h, 22h, 23h and 24h.

Preferably, the speed of the high-speed stirring in step B) is 1000-2500r/min, and the ultrasonic frequency is 20KHZ-60KHZ.

Preferably, the drying method in step 3 is vacuum drying, freeze drying, microwave drying or infrared drying. After drying, the water content of the material is controlled as 10%-80%, which can specifically be 10%, 20%, 30%, 40%, 50%, 60%, 70% and 80%; more preferably, 30%-70%.

When freeze drying is selected, the drying process is carried out by vacuumizing to 0 pa-10 pa at temperature of -50°C-5°C, which can specifically be -50°C, -40°C, -30°C, -20°C, -10°C, 0°C and 5°C; holding for 3h-20h, which can specifically be 3h, 4h, 5h, 6h, 7h, 8h, 9h, 10h, 11h, 12h, 13h, 14h, 15h, 16h, 17h, 18h, 19h and 20h; more preferably, 3h-12h.

The main solution of the present invention and further alternatives thereof may be combined freely to form a plurality of solutions, all of which may be adopted and claimed in the present invention; and each alternative can be arbitrarily combined with other compatible alternatives according to the present invention. Multiple combinations are clear to those skilled in the art based on the prior art and the common general knowledge after understanding the solutions of the present invention, all of which are technical solutions to be protected by the present invention and are not exhaustive here.

The implementation of the present invention is described below through specific examples, and those skilled in the art can easily understand other advantages and effects of the present invention from the contents disclosed in the Description. The present invention can also be implemented or applied in other different specific implementations, and various details in the Description can also be modified or changed based on different views and applications without departing from the spirit of the present invention. It should be noted that, the following embodiments and the features in the embodiments may be combined with each other in a non-conflicting situation.

It should be noted that, the technical solutions of the embodiments of the present invention will be described clearly and completely as follows in combination with the figures of these embodiments for clear understanding of the objects, technical solutions and advantages of the present invention. Apparently, the embodiments described herein are only some, but not all of the embodiments of the present invention. Generally, the components in the embodiments of the present invention described and shown in the figures herein may be arranged and designed in various configurations. According to the present invention, the specific operations in the stirring, including mechanical stirring and high-speed dispersion, are not specified, and the brine in the present invention is also not specified, any operations and brine well known to those skilled in the art are available.

For data analysis in the following examples, Al, K, Ca, Na, Mg and concentration are analyzed by ICP spectrometry, Cl is analyzed by spectrophotometry or titration, Li and B are determined by atomic absorption spectrometry, and sulfate radical is determined by barium sulfate turbidimetry (GB 13580.6-92). Unless particularly stated elsewhere, % recited in this application shows the mass percentage, namely wt%.

The chemical composition of the simulated brine used in the following embodiments is as follows:

### Simulated brine 1:

| PH | Density | Li⁺ | Na⁺ | K⁺ | Fe | Ca²⁺ | Mg²⁺ | Cl- | SO42- | B³⁻ |
|---|---|---|---|---|---|---|---|---|---|---|
| | g/cm³ | mg/L | | | | | | | | |
| 6.6 | 1.181 | 196 | 36000 | 2890 | 3 | 620 | 1510 | 58600 | 4300 | 203 |

### Simulated brine 2:

| PH | Density | Li⁺ | Na⁺ | K⁺ | Fe | Mg²⁺ | Ca²⁺ | Cl⁻ | SO₄²⁻ | B³⁻ |
|---|---|---|---|---|---|---|---|---|---|---|
| | g/cm³ | mg/L | | | | | | | | |
| 6.7 | 1.181 | 686 | 93500 | 10100 | 6.3 | 1596 | 534 | 149995 | 7870 | 468 |

### Simulated brine 3:

| PH | Density | Li⁺ | Na⁺ | K⁺ | Fe | Mg²⁺ | Ca²⁺ | Cl | SO₄²⁻ | B³⁻ |
|---|---|---|---|---|---|---|---|---|---|---|
| | g/cm³ | mg/L | | | | | | | | |
| 6.8 | 1.195 | 952 | 103950 | 9703 | 13.7 | 1006 | 3011 | 166498 | 11106 | 813 |

### Embodiment 1:

### Step 1: preparation of lithium-intercalated aluminum salt slurry

Two hundred grams of spray dried polyaluminum chloride (for drinking water use, containing 14.5% aluminum, 5.7% calcium and 1.5% Fe), 7.9g of lithium hydroxide (AR) are mixed in 600g of water, and stirred for 15 minutes under 40KHZ ultrasonic wave to obtain a mixed salt solution, 3mol/L NaOH is dropped into the mixed salt solution at a feeding rate of 20 mL/min to adjust the pH value to 7.1, and then the solution is continuously stirred for 60 minutes at 25°C for reaction, so as to obtain the lithium-intercalated aluminum salt precursor slurry.

### Step 2: preparation of a granular aluminum salt lithium extraction adsorbent:

A) Preparation of a VC composite adhesive: 50g of acid-soluble chitosan and 20g of lactic acid are dissolved in 500g of water, and stirred evenly to obtain C hydrosol; another 5g of polyvinyl alcohol (1788) is dissolved in 50 mL of water and stirred in a 85°C water bath to obtain V hydrosol, and then added to the prepared C hydrosol and stirred to obtain the VC composite adhesive;
B) Homogenizing: the VC composite adhesive prepared in A is added to the slurry obtained in step 1, dispersed by stirring at a high speed of 1500r/min, and then ultrasonically blended at 40KHZ for 15min to obtain blended slurry;
C) Molding and granulation: the blended slurry obtained in B is added to pH 12.5 NaOH solution through a granulating device for granulation (rotating disc granulating method is adopted, referring to CN 114345291A), 0.5-2.5mm particles are sieved out and cross-linked for 2h in 0.5% citral solution, and spin-dried before freeze drying for 6h at -20 °C under vacuum degree of 0.5Pa, so as to obtain a granular aluminum salt lithium extraction adsorbent 1# containing 65% water. For the granular aluminum salt lithium extraction adsorbent product, the Al/Li molar ratio is 3.01:1 and the porosity is 76.35%.

### Embodiment 2:

Referring to the preparation method for the granular aluminum salt lithium extraction adsorbent in Embodiment 1, the only difference lies in that the amount of LiOH in step 1 of Embodiment 1 is adjusted to 4.51g. As a result, a granular aluminum salt lithium extraction adsorbent 2# is obtained.

### Embodiment 3:

Referring to the preparation method for the granular aluminum salt lithium extraction adsorbent in Embodiment 1, the only difference lies in that the amount of LiOH in step 1 of Embodiment 1 is adjusted to 8.0g. As a result, a granular aluminum salt lithium extraction adsorbent 3# is obtained.

### Embodiment 4:

Referring to the preparation method for the granular aluminum salt lithium extraction adsorbent in Embodiment 1, the only difference lies in that the aluminum source in step 1 of Embodiment 1 is replaced with food grade polyaluminum chloride (containing 14.7% Al), and the ratio of aluminum to lithium of feeding materials is controlled as 2.2:1.05, so as to obtain a granular aluminum salt lithium extraction adsorbent 4#.

The performances of the granular aluminum salt lithium extraction adsorbents obtained in Embodiments 1-4 are evaluated, as shown below:
The granular aluminum salt lithium extraction adsorbents 1#, 2#, 3# and 4# prepared in Embodiments 1-4 are sieved individually to obtain 1-2mm particles of the aluminum salt lithium extraction adsorbents, which are added to a chromatographic column respectively (equivalent to about 100g by dry weight) for 15-minute adsorption with the simulated brine 1, the simulated brine 2 and the simulated brine 3 separately, and then deionized water is added to the columns for 1h at normal temperature for desorption. The test results are shown below:

| Embodiment | | 1# | 2# | 3# | 4# |
|---|---|---|---|---|---|
| Al/Li (molar ratio) | | 3.01:1 | 6.5:1 | 2.21:1 | 3.1:1 |
| Porosity | | 76.35% | 78.65% | 71.60% | 85.65% |
| Simulated brine 1 | Li adsorption capacity (mg/g) | 7.5 | 7.7 | 6.8 | 8.5 |
| | Li adsorption capacity (mg/g) | 7.5 | 7.7 | 6.8 | 8.5 |
| Simulated brine 2 | Li adsorption capacity (mg/g) | 11.8 | 12.3 | 9.6 | 13.6 |
| | Li adsorption capacity (mg/g) | 11.8 | 12.3 | 9.5 | 13.5 |
| Simulated brine 3 | Li adsorption capacity (mg/g) | 13.5 | 13.8 | 11.9 | 15.5 |
| | Li adsorption capacity (mg/g) | 13.5 | 13.8 | 11.9 | 15.3 |

The above table reveals that the granular adsorbents with high porosity and high lithium adsorption capacity are obtained by controlling the Al-Li ratio at high level, and the raw material lithium consumption is reduced under the condition of high Al-Li ratio, so the cost is reduced.

### Embodiments 5-11:

The preparation method is similar to that of Embodiment 4, but the difference is that one of the conditions of aluminum source, lithium source and alkali of the raw materials for synthesis in step 1 is changed to prepare different granular aluminum salt lithium extraction adsorbents, and simulated brine 2 is used for adsorption-desorption evaluation.

| Testing Conditions and Evaluation Results of Prepared Granular Adsorbents in Embodiments 5-11 | | | | |
|---|---|---|---|---|
| S/N | Changed conditions | Li adsorption capacity (mg/g) | Li adsorption capacity (mg/g) | Solution loss for 50 cycles |
| Embodiment 5 | Aluminum source is polyaluminum ferric chloride | 12.6 | 12.5 | <0.05% |
| Embodiment 6 | Lithium source is anhydrous lithium chloride | 12.7 | 12.6 | <0.05% |
| Embodiment 7 | Lithium source is lithium sulfate | 11.8 | 11.7 | <0.05% |
| Embodiment 8 | Lithium source is lithium bicarbonate | 12.3 | 12.3 | <0.05% |
| Embodiment 9 | NaOH is replaced with KOH, pH=7.6 for synthesis | 13.3 | 13.3 | <0.05% |
| Embodiment 10 | NaOH is replaced with sodium carbonate, pH=7.1 for synthesis | 13.6 | 13.6 | <0.05% |
| Embodiment 11 | NaOH is replaced with potassium bicarbonate, pH=7.0 for synthesis | 13.7 | 13.7 | <0.05% |

### Comparative example 1:

The preparation method is similar to that of Embodiment 4, but the difference is that the aluminum source in step 1 of Embodiment 1 is replaced with anhydrous aluminum chloride to prepare a granular aluminum salt lithium extraction adsorbent.

### Comparative example 2

The preparation method is similar to that of Embodiment 4, but the difference is that the aluminum source in step 1 of Embodiment 1 is replaced with hydroxy-aluminum to prepare a granular aluminum salt lithium extraction adsorbent, which is tested with the simulated brine 2.

### Comparative example 3

The preparation method is similar to that of Embodiment 4, but the difference is that the aluminum source in step 1 of Embodiment 1 is replaced with industrial polyaluminum chloride to prepare a granular aluminum salt lithium extraction adsorbent, which is tested with the simulated brine 2.

| Evaluation Results of Granular Adsorbents in Comparative Examples 1-3 | | | |
|---|---|---|---|
| Comparative item | Al/Li (molar ratio) of product | Li adsorption capacity (mg/g) | Li adsorption capacity (mg/g) |
| Embodiment 4 | 2.21:1 | 13.6 | 13.5 |
| Comparative example 1 | 2.21:1 | 6.8 | 6.8 |
| Comparative example 2 | 2.30:1 | 5.6 | 5.6 |
| Comparative example 3 | 2.25:1 | 6.9 | 6.6 |

### Embodiments 12-20:

The preparation method is similar to that of Embodiment 4, but the difference is that one of the conditions of chitosan, adjuvant, cross-linking agent, additive and the like of the integrated granulation process in step 2 of Embodiment 1 is changed to prepare different granular aluminum salt lithium extraction adsorbents, and simulated brine 2 is used for evaluation of lithium adsorption and extraction.

| Testing Conditions and Evaluation Results of Prepared Granular Adsorbents in Embodiments 12-20 | | | | |
|---|---|---|---|---|
| S/N | Changed conditions | Li adsorption capacity (mg/g) | Li adsorption capacity (mg/g) | Solution loss for 50 cycles |
| Embodiment 12 | Adjuvant is citric acid | 12.9 | 12.8 | 0.05% |
| Embodiment 13 | Adjuvant is gluconic acid | 12.5 | 12.5 | 0.11% |
| Embodiment 14 | Adjuvant is malic acid | 11.8 | 11.7 | 0.07% |
| Embodiment 15 | Hydrochloride chitosan, 0% additive | 13.3 | 13.3 | 0.05% |
| Embodiment 16 | Carboxymethyl chitosan, 0% additive | 10.3 | 10.3 | 0.10% |
| Embodiment 17 | Quaternary ammonium salt chitosan, 0% additive | 12.9 | 12.9 | 0.10% |
| Embodiment 18 | Cross-linking agent is cinnamyl aldehyde | 12.7 | 12.5 | 0.11% |
| Embodiment 19 | Cross-linking agent is citronellal | 13.1 | 13.0 | <0.05% |
| Embodiment 20 | Cross-linking agent is anisaldehyde | 11.9 | 11.6 | <0.05% |
| Embodiment 21 | Additive is sodium alginate | 12.8 | 12.7 | 0.12% |
| Embodiment 22 | Additive is agar | 13.2 | 13.2 | 0.11% |

### Embodiment 21:

The preparation method is similar to that of Embodiment 4, but the difference is that the freeze drying is carried out at temperature of -20 °C for 8h to prepare a granular aluminum salt lithium extraction adsorbent, which containing 50% water.

### Embodiment 22:

The preparation method is similar to that of Embodiment 4, but the difference is that the freeze drying is carried out at temperature of -20 °C for 10h to prepare a granular aluminum salt lithium extraction adsorbent, which containing 30% water.

### Embodiment 23:

The preparation method is similar to that of Embodiment 4, but the difference is that the wet granulated particles are centrifuged to remove 80% water and then directly added to a chromatographic column.

| Evaluation Results of Granular Adsorbents in Embodiments 21-23 | | | |
|---|---|---|---|
| Comparative item | Li adsorption capacity (mg/g) at 0.2h | Li adsorption capacity (mg/g) at 4h | Solution loss for 50 cycles |
| Embodiment 21 | 8.5 | 12.7 | <0.02% |
| Embodiment 22 | 7.9 | 9.5 | 0.05% |
| Embodiment 23 | 13.6 | 13.6 | 0.13% |

### Comparative example 4:

The preparation method is similar to that of Embodiment 1, but the difference is that the wet granulated particles in step 2 of Embodiment 1 are dried in vacuum at 60 °C to a water content of 50%, and then added to a chromatographic column for evaluation.

### Comparative example 5:

The preparation method is similar to that of Embodiment 1, but the difference is that the wet granulated particles in step 2 of Embodiment 1 are dried at normal temperature to a water content of 50%, and then added to a chromatographic column for evaluation.

### Comparative example 6:

The preparation method is similar to that of Embodiment 1, but the difference is that the wet granulated particles in step 2 of Embodiment 1 are dried in microwave to a water content of 50%, and then added to a chromatographic column for evaluation;

The above evaluation results are shown below:

| Evaluation Results of Granular Adsorbents in Comparative Examples 5-7 | | |
|---|---|---|
| Comparative item | Li adsorption capacity (mg/g) | Li adsorption capacity (mg/g) |
| Embodiment 21 | 12.5 | 11.9 |
| Comparative example 4 | 6.5 | 6.5 |
| Comparative example 5 | 4.5 | 4.5 |
| Comparative example 6: | 4.4 | 4.3 |

### Embodiment 24: Evaluation on Service Life Cycle of Granular Adsorbent

The granular adsorbent prepared under the conditions in Embodiment 4 is subject to the service life test, wherein the industrialized unidirectional dynamic adsorption and desorption in column are simulated in 500 continuous cycles. The simulated brine 2 is also used in this test, and the concrete test results are as follows:

| Number of cycles | Li adsorption capacity (mg/L) | Li elution rate | Solution loss |
|---|---|---|---|
| 1 | 12.5 | 98.5% | <0.001% |
| 30 | 13.3 | 100% | <0.001% |
| 50 | 12.8 | 97.6% | <0.001% |
| 70 | 12.9 | 99.5% | <0.001% |
| 120 | 12.7 | 95.4% | <0.001% |
| 160 | 12.6 | 94.8% | <0.001% |
| 210 | 12.3 | 98.5% | <0.001% |
| 250 | 12.7 | 95.3% | <0.001% |
| 300 | 11.9 | 95.4% | <0.001% |
| 350 | 12.1 | 94.6% | <0.001% |
| 400 | 11.5 | 98.5% | <0.001% |
| 450 | 11.3 | 95.3% | <0.005% |
| 500 | 10.6 | 95.4% | <0.005% |

**The above table reveals that the prepared granular functional lithium extraction material has excellent cycle stability.**

### Embodiment 25: Adsorption Performance Test with Lithium Sulfate Solutions

The granular adsorbent prepared in Embodiment 4 is subjected to an adsorption test in a water bath oscillator at constant temperature of 25 °C with the lithium sulfate solutions (390mg/L Li and 5.0g/L Na; and 693mg/L Li and 5.0g/L Na), and then desorbed with deionized water at an oscillating frequency of 150HZ. The adsorption-desorption evaluation indicates that the granular aluminum salt lithium extraction adsorbent achieves the adsorption equilibrium after 10 minutes. The adsorption-desorption evaluation is made based on molecular components of lithium sulfate, and results are shown in table below:

| Adsorption Results of Adsorbent in Embodiment 4 with the Lithium Sulfate Solutions | | | | |
|---|---|---|---|---|
| | Li⁺(mg/L) | SO₄²⁻(mg/L) | Cl⁻(mg/L) | Na⁺(mg/L) |
| Initial concentration | 390 | 13114 | <10 | 5000 |
| Post-adsorption | 36 | 10474 | <10 | 4960 |
| Post-desorption | 370 | 3043 | <10 | 133 |
| Li adsorption capacity | 15.8 mg/g | | | |
| Li desorption capacity | 15.8 mg/g | | | |

### Embodiment 26: Adsorption Performance Test with Lithium Chloride Solutions

The granular adsorbent prepared in Embodiment 4 is subjected to an adsorption test in a water bath oscillator at constant temperature of 25 °C with the lithium chloride solutions (397mg/L Li and 5.2g/L Na; and 701mg/L Li and 5.1g/L Na), and then desorbed with deionized water at an oscillating frequency of 150HZ. The adsorption-desorption evaluation indicates that the granular aluminum salt lithium extraction adsorbent achieves the adsorption equilibrium after 10 minutes. The adsorption-desorption evaluation is made based on molecular components of lithium chloride, and results are shown in table below:

| Adsorption Results of Adsorbent in Embodiment 4 with the Lithium Chloride Solutions | | | | |
|---|---|---|---|---|
| | Li⁺(mg/L) | SO₄²⁻(mg/L) | Cl⁻(mg/L) | Na⁺(mg/L) |
| Initial concentration | 393 | <20 | 9678 | 5100 |
| Post-adsorption | 86 | <20 | 7913 | 4960 |
| Post-desorption | 370 | <20 | 2356 | 321 |
| Li adsorption capacity | 11.8mg/g | | | |
| Li desorption capacity | 11.8mg/g | | | |

### Embodiment 27: Adsorption Performance Test with A Mixed Lithium Chloride-Lithium Sulfate Solution

The granular adsorbent prepared in Embodiment 4 is subjected to an adsorption test in a water bath oscillator at constant temperature of 25 °C with the mixed lithium chloride-lithium sulfate solution (700mg/L Li and 10.0g/L Na), and then desorbed with deionized water at an oscillating frequency of 150HZ. The adsorption-desorption evaluation indicates that the granular aluminum salt lithium extraction adsorbent achieves the adsorption equilibrium after 10 minutes. The adsorption-desorption evaluation is respectively made based on molecular components of lithium chloride and lithium sulfate, and results are shown in table below:

| Adsorption Results of Adsorbent in Embodiment 4 with the Mixed Salt Solution | | | | |
|---|---|---|---|---|
| | Li⁺(mg/L) | SO₄²⁻ (mg/L) | Cl⁻(mg/L) | Na⁺(mg/L) |
| Initial concentration | 403 | 4101 | 2997 | 5000 |
| Post-adsorption | 39 | 2803 | 1933 | 4910 |
| Post-desorption | 380 | 1316 | 1096 | 237 |
| Li adsorption capacity | 13.1 mg/g | | | |
| Li desorption capacity | 13.1 mg/g | | | |

Embodiments 25-27 well demonstrate that the functional adsorbent is able to be used for extracting lithium from lithium chloride type salt lakes, lithium sulfate type salt lakes and salt lakes combining the two types.

The above description of preferred embodiments should not be interpreted in a limiting manner since those of ordinary skill in the art can make improvements or changes according to the aforesaid description, and all these improvements and changes should fall into the protection scope of the claims of the present invention.

## Claims

1. A preparation method for a high-adsorption-capacity granular aluminum salt lithium extraction adsorbent, **characterized by** comprising following steps:
step 1, preparation of lithium-intercalated aluminum salt precursor slurry:
uniformly mixing an aluminum source, a lithium source and water in proportion, ultrasonically stirring to dissolve, and obtaining a mixed salt solution, adding alkali liquor to the mixed salt solution to adjust the pH value to 6-9, and then obtaining the lithium-intercalated aluminum salt precursor slurry after reaction;
step 2, integrated granulation:
A) preparing a VC composite adhesive: dissolving biological polysaccharide in water, adding an adjuvant and stirring to obtain C hydrosol; dissolving an aqueous additive in hot water to prepare V hydrosol; and mixing the resulting prepared C hydrosol and the V hydrosol in proportion to obtain the composite adhesive, namely the VC composite adhesive;
B) blending and homogenizing: adding the VC composite adhesive prepared in A) to the lithium-intercalated aluminum salt precursor slurry obtained in step 1, stirring to disperse and homogenizing at high speed, and ultrasonically stirring to obtain blended slurry;
C) granulating: dropping the blended slurry into a receptor fluid through a granulating device for molding, and then sieving; and
D) cross-linking: soaking the sieved granulated particles in a cross-linked fluid to obtain a granular material; and
step 3, drying and activating:
drying, dehydrating, washing and activating the granular material prepared in step 2 to obtain the granular aluminum salt lithium extraction adsorbent.

2. The preparation method according to claim 1, **characterized in that**, the aluminum source in step 1 is any one selected from a group consisting of polyaluminum chloride for drinking water use, polyaluminum ferric chloride for drinking water use, food grade polyaluminum chloride and aluminium chlorohydrate; the lithium source is any one or more selected from a group consisting of lithium hydroxide, lithium bicarbonate, lithium sulfate and lithium hydroxide; and the alkali liquor is any one selected from a group consisting of aqueous solutions of sodium hydroxide, potassium hydroxide, sodium carbonate, potassium carbonate, sodium bicarbonate and potassium bicarbonate, with concentration of 1mol/L-5mol/L.

3. The preparation method according to claim 1, **characterized in that**, the addition amount of the aluminum source and the lithium source is 6.5:1-1.5:1 according to the molar ratio of aluminum to lithium; and a solid content is controlled as 15wt%-50wt% by the amount of water added.

4. The preparation method according to claim 1, **characterized in that**, the biological polysaccharide in step A) is chitosan, comprising acid-soluble chitosan and modified chitosan; the modified chitosan is any one selected from a group consisting of hydrochloride chitosan, carboxymethyl chitosan and quaternary ammonium salt chitosan; the mass concentration of the prepared C hydrosol is 5-10%; and the adjuvant in step A) is any one or more selected from a group consisting of citric acid, lactic acid, oxalic acid, gluconic acid, glycolic acid, malic acid and tartaric acid, and the addition amount of the adjuvant is controlled as 0%-10% by mass.

5. The preparation method according to claim 1, **characterized in that**, the aqueous additive in step A) is any one selected from a group consisting of polyvinyl alcohol, sodium alginate and agar, the hot water is at temperature of 70-95°C, and the mass concentration of the V hydrosol is 5-10%; the mass ratio of the biological polysaccharide to the aqueous additive in the VC composite adhesive is 8-2:1; and the ratio of the VC composite adhesive to the aluminum salt precursor slurry is 1:7-1:9 by mass ratio of adhesive to powder in molded material.

6. The preparation method according to claim 1, **characterized in that**, the speed of the high-speed dispersion stirring in step B) is 1000-2500r/min; and the ultrasonic frequency is 20KHZ-60KHZ.

7. The preparation method according to claim 1, **characterized in that**, the receptor fluid in step C) is any one or more selected from a group consisting of aqueous solutions of sodium hydroxide, potassium hydroxide and lithium hydroxide, and pH value of the receptor fluid is controlled as 10-13.

8. The preparation method according to claim 1, **characterized in that**, the cross-linked fluid in step D) is any one selected from a group consisting of citral, cinnamyl aldehyde, citronellal, anisaldehyde and genipin, the mass concentration of the cross-linked fluid is 0.5-5%, and the crosslinking time is controlled as 0.5h-24h.

9. The preparation method according to claim 1, **characterized in that**, the drying method in step 3 is any one selected from a group consisting of vacuum drying, freeze drying and infrared drying, and the water content is controlled as 20%-80% in dried product.

10. The high-adsorption-capacity granular aluminum salt lithium extraction adsorbent prepared according to any one of claims 1-9.
